# EUROPEAN PATENT APPLICATION

(11) **EP 2 932 842 A1**
(43) Date of publication of application: **21.10.2015**
(21) Application number: 14164939.2
(22) Date of filing: 16.04.2014
(51) Int. Cl.: A01N 25/00, A01N 59/06, A01N 59/00, A01P 21/00, A01C 1/06

(54) **Rice seed treatment composition and method**

(71) Applicant: Syngenta Participations AG, 4058 Basel (CH)
(72) Inventor: The designation of the inventor has not yet been filed
(74) Representative: Syngenta International AG

(57) **Abstract**

A rice seed treatment composition can comprise an oxygen generator, a seed weight increaser and a water-insoluble binder. Optionally a water-insoluble binder can also be included. Rice seeds can be treated with such a composition in powdered form by adding it to rice seeds in combination with water.

## Description

### Field of the Invention

The present invention relates to compositions for application to rice seed. More specifically the invention relates to compositions for wet sown direct sown rice seed.

### Background of the Invention

Rice planting can generally be divided into two categories: direct sown rice, which uses seeds, and transplanted rice, which involves seedlings. Direct sown rice can be planted into a flooded field or a field without excess water. In flooded fields, the soil is covered with a layer of water, typically from 3-10 cm deep. Rice is either sown onto the soil surface or drilled into the upper layer of the soil. Whether rice seeds are sown upon the surface or drilled into the soil, either way the seed is submerged in water. Such a planting method is referred to as wet sown direct sown rice, which is the focus of the present invention.

Wet soil-surface sowing with non-germinated seeds uses seeds coated with iron powder such as that described in JP 2005-192458. Such rice may have a pre-germination treatment before coating which involves soaking in water at about 15°C to 20°C for 3 to 4 days for enzyme activation or priming, but because the seeds are not actively germinating they have some degree of shelf life, for example 6 months. A seed treatment can be applied to the rice seeds. It is known to coat the rice seed with e.g. iron powder which will weigh down the rice seed and encourage it to settle just into the uppermost millimeters of the soil. Without such a weight increaser the rice may float and be washed away with movement of the surface water. Also without a weight increaser it is typical to have random movements of the rice during settling, which can create an uneven crop stand.

A conventional iron powder treatment for adding weight to rice seed creates a hard outer shell; this also has the benefit of discouraging bird picking. A standard procedure is to coat the seeds in iron powder and burnt plaster (bassanite, calcium sulphate hemihydrate CaSO₄·1/2H₂O) with the addition of water the iron is oxidized, releasing heat and converting the coating to iron oxide and plaster. When this is dried to about 10% total moisture content - approximately the same moisture rate of the rice at the beginning of the process - a hardened shell is formed on the rice seed.

When the wet sown direct sown rice is drilled into the soil surface, this is typically done to a depth of approximately 0.5 cm. It is standard practice to use pre-germinated rice when drilling into the soil layer. To get the rice to germinate it is soaked in water at about 15°C for about 4 to 6 days. Optionally a seed can be coated with agrochemicals after the soaking step, before sowing. Germinated seeds have a very short shelf life, less than one week. One treatment which is used to help improve growing conditions for the seed soil is to coat the seed with an oxygen generator (e.g. calcium peroxide). JP 2012-239459 discusses how in-soil wet sown direct sown rice benefits from the addition of an oxygen generator coating on the seed before sowing. JP 61-166304 discloses a method of coating rice seeds with the oxygen enhancer magnesium peroxide along with a binder, to improve emergence.

Despite the existing technologies, there remains a need in the art for improved wet sown direct sown rice seed treatment compositions and methods to apply the same.

### Summary of the Invention

It is therefore an object of the present invention to provide an improved wet sown direct sown rice seed treatment composition. Methods to apply the same are also provided.

The solution according to the invention lies with provision of a rice seed treatment composition which comprises an oxygen generator, a seed weight increaser and a water-insoluble binder. The composition may also include a water soluble binder.

The oxygen generator may be present in an amount of from about 5 to about 80% by weight, preferably 20-55%. The seed weight increaser may be present in an amount of from about 20 to about 80% by weight, preferably about 40-80%. The water-insoluble binder may be present in an amount of from about 1 to about 20% by weight, preferably 10-20%. The water soluble binder may be present in an amount of from about 1 to about 20% by weight, preferably 10-20%.

The oxygen generator could be selected from magnesium peroxide (MgO₂), strontium peroxide (SrO₂), zinc peroxide (ZnO₂) and calcium peroxide (CaO₂). The seed weight increaser could be selected from iron (Fe), quartz sand, barium sulfate, calcium carbonate, zinc oxide and iron oxide (Fe₂O₃). The water-insoluble binder could be a polymer, for example polyacrylate adhesive, polyurethane or PVAc, and copolymer of VA, VeoVA, acrylate ester. The water soluble binder could be a polymer, for example polyvinyl alcohol, CMC, HPMC or PVP.

In an embodiment the oxygen generator is present in an amount from 30-50% by weight, the seed weight increaser is present in an amount from 50-70% by weight the water-insoluble binder is present in an amount from 1-8% by weight, and the water soluble binder is present in an amount from 3-7% by weight.

The inventive composition may be provided in powdered form.

According to another aspect of the invention, a process for preparing coated rice seeds is provided which comprises placing rice seeds in a treatment vessel, adding water and a powdered composition comprising an oxygen generator, a seed weight increaser and a water-insoluble binder to the treatment vessel, mixing the contents of the treatment vessel until a homogenous coating of composition onto rice seeds is achieved and drying the coated rice seeds. The powdered composition could also contain a water soluble binder.

According to another aspect of the invention, a method of improving a growth characteristic of a rice crop is provided which comprises treating rice seeds with the inventive composition, sowing the treated seeds and growing the rice crop. The growth characteristic which is improved could be for example germination, emergence, establishment or growth rate.

According to another aspect of the invention, a method of improving retention of generated oxygen on a sown rice seed is provided which comprises treating the rice seed with the inventive composition prior to sowing.

According to another aspect of the invention, a method of improving adherence of a coating composition on a rice seed is provided which comprises preparing coated rice seeds according to a process of the invention.

As used herein "rice" refers to the cereals scientifically classified as rice such as *Oryza glaberrima, O. nivara, O. rufipogon* and *O. sativa* and also plants which are commonly referred to as rice for example *Zizania spp.*

The rice discussed herein is to be understood as being those crops which are naturally occurring, obtained by conventional methods of breeding, or obtained by genetic engineering. They include crops which contain so-called output traits (e.g. improved storage stability, higher nutritional value and improved flavour).

Rice crops are to be understood as also including those crops which have been rendered tolerant to herbicides like bromoxynil or classes of herbicides such as ALS-, EPSPS-, GS-, HPPD- and PPO-inhibitors. Crops are also to be understood as being those which naturally are or have been rendered resistant to harmful insects. This includes plants transformed by the use of recombinant DNA techniques, for example, to be capable of synthesising one or more selectively acting toxins, such as are known, for example, from toxin-producing bacteria. Examples of toxins which can be expressed include δ-endotoxins, vegetative insecticidal proteins (Vip), insecticidal proteins of bacteria colonising nematodes, and toxins produced by scorpions, arachnids, wasps and fungi. Crops or seed material thereof can also be resistant to multiple types of pests (so-called stacked transgenic events when created by genetic modification). For example, a plant can have the ability to express an insecticidal protein while at the same time being herbicide tolerant.

As used herein, the term "seed" refers to any suitable plant propagation material and specifically includes seeds in the strict sense as well as vegetative material of plants such as synthetic seeds created using tissue culture.

### Detailed Description of the Invention

According to the invention, a non-germinated rice seed, optionally primed or pre-germinated, is provided with a composition including an oxygen generator, a seed weight increaser, and a water-insoluble binder. The composition may also include a water soluble binder.

An oxygen generator can be any compound or composition which, when present on a sown rice seed, creates or reacts with the local environment to create oxygen. Examples include magnesium peroxide, calcium peroxide, strontium peroxide and zinc peroxide. Although it is within the scope of the invention to use technical grade oxygen generator, it may be more convenient for skilled persons to practice the invention using commercial products. Such products typically contain the oxygen generator as the active ingredient, some at e.g. about 30 to 40%, along with other adjuvants and inert ingredients. An example is magnesium peroxide, the commercial product for which would also include MgO and Mg(OH). The 5-80 wt% of oxygen generator incorporated in the inventive composition refers to any product used as oxygen generator. However it is contemplated that commercial product will most often be used, resulting in some cases in a wt% of actual oxygen generator agent in the range of e.g. 2-60 wt%.

A seed weight increaser can be any compound or composition which will increase the weight or density of a rice seed. In terms of amounts, one strives to increase by a sufficient amount to cause rice comprising the weight increaser to promptly settle onto the soil surface when soil-surface rice planting is performed. It will be apparent to skilled persons that the amount will necessarily vary depending on the planting conditions, rice seed variety and moisture content, and properties of the weight increaser. Examples include iron oxide such as in powder form, iron powder, quartz sand, barium sulfate, calcium carbonate, and zinc oxide.

Water-insoluble binders are known in the art and any which are suitable for application to a rice seed can be used in practicing the present invention. Examples include polyacrylate adhesive, PVAc/VeoVA/polyacrylate, EVA, polyurethane, and PVAc. A specific example is Mowinyl-Powder DM2072P copolymer of VA, VeoVA, acrylate ester (Nippon Gohsei, Osaka, Japan).

Water soluble binders are known in the art and any which are suitable for application to a rice seed can be used in practicing the present invention. Examples include polyvinyl alcohol, CMC, HPMC and PVP. A specific example is PVA117S polyvinyl alcohol (Kuraray, Tokyo, Japan).

Compositions according to the invention are efficacious, offering improved emergence and prompt progression through growth stages for rice. The composition provides good results for hardness, stability and adhesive properties in the treated rice seed. Handling properties during the coating process are sufficiently good to be used at a commercial scale.

Rice seeds treated with the composition of the invention may further include an agrochemical applied simultaneously or separately. Such agrochemicals can include fungicides, insecticides, bactericides, acaricides, nematicides and/or plant growth regulators. These agents may be provided as formulations comprising, *inter alia,* carriers, surfactants or application promoting adjuvants customarily employed in the art of formulation. The present invention is also suitable for use with other agrochemicals such as primers and safeners.

Examples of suitable agrochemicals include the following:
Insecticides such as benzoylureas, carbamates, chloronicotinyls, diacylhydrazines, diamides, fiproles, macrolides, neonicotinoids, nitroimines, nitromethylenes, organochlorines, organophosphates, organosilicons, organotins, phenylpyrazoles, phosphoric esters, pyrethroids, spinosyns, tetramic acid derivatives and tetronic acid derivatives.

Specific examples of preferred insecticides include thiamethoxam, clothianidin, imidacloprid, acetamiprid, dinotefuran, nitenpyram, thiacloprid, thiodicarb, aldicarb, carbofuran, furadan, fenoxycarb, carbaryl, sevin, ethienocarb, fenobucarb, chlorantraniliprole, cyantraniliprole, flubendiamide, spinosad, spinetoram, lambda-cyhalothrin, gamma-cyhalothrin, tefluthrin, fipronil, and sulfoxaflor.

Fungicides such as acycloamino acid fungicides, aliphatic nitrogen fungicides, amide fungicides, anilide fungicides, antibiotic fungicides, aromatic fungicides, arsenical fungicides, aryl phenyl ketone fungicides, benzamide fungicides, benzanilide fungicides, benzimidazole fungicides, benzothiazole fungicides, botanical fungicides, bridged diphenyl fungicides, carbamate fungicides, carbanilate fungicides, conazole fungicides, copper fungicides, dicarboximide fungicides, dinitrophenol fungicides, dithiocarbamate fungicides, dithiolane fungicides, furamide fungicides, furanilide fungicides, hydrazide fungicides, imidazole fungicides, mercury fungicides, morpholine fungicides, organophosphorous fungicides, organotin fungicides, oxathiin fungicides, oxazole fungicides, phenylsulfamide fungicides, polysulfide fungicides, pyrazole fungicides, pyridine fungicides, pyrimidine fungicides, pyrrole fungicides, quaternary ammonium fungicides, quinoline fungicides, quinone fungicides, quinoxaline fungicides, strobilurin fungicides, sulfonanilide fungicides, thiadiazole fungicides, thiazole fungicides, thiazolidine fungicides, thiocarbamate fungicides, thiophene fungicides, triazine fungicides, triazole fungicides, triazolopyrimidine fungicides, urea fungicides, valinamide fungicides, and zinc fungicides.

Specific examples of preferred fungicides include azoxystrobin, trifloxystrobin, fluoxastrobin, cyproconazole, difenoconazole, prothioconazole, tebuconazole, triticonazole, fludioxonil, thiabendazole, ipconazole, cyprodinil, myclobutanil, metalaxyl, metalaxyl-M (also known as mefenoxam), sedaxane, and penflufen.

Nematicides such as antibiotic nematicides, avermectin nematicides, botanical nematicides, carbamate nematicides, oxime carbamate nematicides, and organophosphorus nematicides.

Specific examples of preferred nematicides include abamectin, aldicarb, thiadicarb, carbofuran, carbosulfan, oxamyl, aldoxycarb, ethoprop, methomyl, benomyl, alanycarb, iprodione, phenamiphos (fenamiphos), fensulfothion, terbufos, fosthiazate, dimethoate, phosphocarb, dichlofenthion, isamidofos, fosthietan, isazofos ethoprophos, cadusafos, terbufos, chlorpyrifos, dichlofenthion, heterophos, isamidofos, mecarphon, phorate, thionazin, triazophos, diamidafos, fosthietan, phosphamidon, imicyafos, captan, thiophanate-methyl and thiabendazole.

Nematicidally active biological agents include any biological agent that has nematicidal activity and could be used with the present invention. The biological agent can be any type known in the art including bacteria and fungi. The wording "nematicidally active" refers to having an effect on, such as reduction in damage caused by, agricultural-related nematodes. Examples of nematicidally active biological agents include Bacillus firmus, B. cereus, B. subtilis, Pasteuria penetrans, P. nishizawae, P. ramosa, P. thornei, and P. usgae. A suitable Bacillus firmus strain is strain CNCM I-1582 which is commercially available as BioNem™. A suitable Bacillus cereus strain is strain CNCM I-1562. Of both Bacillus strains more details can be found in US 6,406,690.

Examples of primers and safeners include benoxacor, cloquintocet-mexyl, cyometrinil, fenclorim, fluxofenim, oxabetrinil and daimuron.

As noted above the agrochemicals of the invention may be provided in the form of formulated products. There can be many purposes for doing so, and for each a different component might be added. For example, it might be desired to protect rice seed during storage and transport from any toxicity issues associated with close physical proximity to an agrochemical. Many other purposes and solutions will be apparent to the skilled person.

Other additives which are used with seeds may advantageously be provided in conjunction with the present invention. Such additives include, but are not limited to, uv-protectants, colorants, brighteners, pigments, dyes, extenders, dispersing agents, excipients, anti-freeze agents, herbicidal safeners, seed safeners, seed conditioners, micronutrients, fertilizers, surfactants, sequestering agents, plasticizers, polymers, emulsifiers, flow agents, coalescing agents, defoaming agents, humectants, thickeners, and waxes. Such additives are commercially available and known in the art.

The present invention additionally includes methods of treatment of rice seeds with the inventive composition, when the composition is in powdered form. The individual components of the composition are mixed together. In addition to an oxygen generator, weight increaser, water-insoluble bonder and optional water soluble binder, one or more agrochemicals such as the examples noted above may optionally be provided. The rice seeds are placed in a container and water is sprayed on the seeds to moisten the surface and be available to adhere the powdered composition. According to one method, a portion of the coating composition is added and the rice seeds are stirred to distribute the composition and allow it to bind to the seeds. The water spraying/composition adding steps are then repeated until all the composition has been added to the seeds. The seeds are allowed to dry until the moisture level of the rice is back to the original state. A typical seed moisture level is about 15%.

Although the method of alternating water spraying/composition adding steps can be suitable, another method for treating rice seeds with the inventive composition uses a continuous or parallel process. In such a process, once the water begins spraying on the seeds the dry composition is gradually but steadily introduced, and these inputs continue in parallel while stirring the seeds until the coating process is completed and the seeds are allowed to dry.

In addition to the possibility of adding one or more agrochemicals to the ingredients of the composition, it is also contemplated that rice seeds could first be treated with one or more agrochemicals before adding the inventive composition. It is also possible that one or more agrochemicals is added as a separate ingredient during the course of applying the inventive composition. Alternatively, after applying the inventive composition one or more agrochemicals may be added in a subsequent step.

Good results are achieved when only enough water is used to moisten the seeds and bind the composition to them. This is not to be regarded as a soaking step as the minimum water amounts used with the invention result in little, if any, water being taken up by the rice seed which would otherwise trigger germination or deteriorate seed quality. In fact an advantage the inventive process has over the prior art is that, when the composition uses iron oxide, the risk of explosion during the process is minimal. In prior art uses of finely ground iron powder, the risk of explosion during the coating process needs to be mitigated by mixing the iron with water, but that water has an undesired effect on the seed and can require additional energy inputs to dry the seed after treatment.

It has been observed that either dividing the materials to be applied into several aliquots and adding them at separate times or alternatively using a continuous application route can give a consistent outcome, especially where small batches of rice seed are treated. Added all the coating composition in a single step can however form granules which do not all stick to the seed, and where they do adhere the coating is not of a good quality in terms of visual appearance and technical performance.

Although any appropriate mixing vessel or container could be sufficient, it is contemplated that a pan granulator or rotational-type mixer (such as that used in building trades to mix concrete) can provide good results in particular when rice seeds are treated at a commercial scale. A skilled person will appreciate how the method to apply the dry composition can be similar to the process of pelleting seeds. Equipment and techniques useful for pelleting may find use with the present invention. When using such equipment a continuous process can be preferred.

The drying step may be at any suitable temperature and humidity. It is believed drying at room temperature or slightly heated temperature (e.g. 35°C) for about 1 day may provide good results with a minimum of energy inputs. A fluidized dryer can be used for the drying step; such machines may be an efficient means to provide warm air.

The following examples are provided by way of exemplification and not limitation.

### Example 1: Comparative study with composition lacking oxygen generator

In order to evaluate advantages of the inventive composition, a comparative test was made with treatments including or excluding an oxygen generator. For all batches the same variety and amount of seed was treated using the same process. Ingredients for the coating were mixed in dry form. Rice seeds were sprayed with enough water to moisten the surface, and then a portion of the powder composition was added to the seeds while stirring. The water and composition addition steps were repeated until the coating was complete. The seeds were allowed to dry.

In the composition all treatments included equal amounts of the same water insoluble binder (Mowinyl-Powder DM2072P, Nippon Gohsei, Osaka, Japan) and water soluble binder (PVA117S).

Inventive compositions 1 and 2 also included iron as a weight increaser and the oxygen generator magnesium peroxide. For the comparative compositions only the iron was added. Amounts are shown in Table 1 below.

**Table 1: Treatments**

| | Total applied per kg rice seed | Soluble binder (PVA) | Insoluble binder (copolymer of VA/VeoVA/ acrylate ester) | Weight increaser | Oxygen generator (MgO₂) |
|---|---|---|---|---|---|
| Inventive 1 | 1 kg | 3% wt | 5% wt | 50% wt Fe₂O₃ | 42% wt |
| Inventive 2 | 1 kg | 3% wt | 5% wt | 50% wt Fe | 42% wt |
| Comparative 1 | 0.5 kg | 3% wt | 5% wt | 92% wt Fe₂O₃ | None |
| Comparative 2 | 0.5 kg | 3% wt | 5% wt | 92% wt Fe | None |

Twice as much total composition, by weight, was applied for treatments according to the invention so that similar amounts of weight increaser would be present on all seeds.

Using containers holding soil covered with water, treated seeds were sown as wet sown direct sown seed drilled into the soil surface at conventional spacing and depth. Seven days after sowing the seeds were evaluated for emergence and growth stage for the emerged plants was recorded. The evaluation was repeated ten days after sowing. Data are shown in Tables 2 and 3 below.

**Table 2: Seven days after sowing**

| | Emergence % | Growth stage as a % of all emerged plants | | |
|---|---|---|---|---|
| | | Coleoptile | Imperfect leaf | First leaf |
| Inventive 1 | 86 | 53 | 20 | 26 |
| Inventive 2 | 82 | 59 | 25 | 15 |
| Comparative 1 | 77 | 72 | 21 | 7 |
| Comparative 2 | 78 | 71 | 24 | 4 |

**Table 3: Ten days after sowing**

| | Emergence % | Growth stage as a % of all emerged plants | | | |
|---|---|---|---|---|---|
| | | Coleoptile | Imperfect leaf | First leaf | Second leaf |
| Inventive 1 | 91 | 8 | 21 | 50 | 22 |
| Inventive 2 | 87 | 12 | 20 | 52 | 15 |
| Comparative 1 | 87 | 15 | 30 | 48 | 6 |
| Comparative 2 | 83 | 8 | 26 | 59 | 8 |

As is evident from the data, seeds treated with the inventive composition showed improved emergence and a faster growth rate than the comparative examples which lacked oxygen generator.

### Example 2: Comparative study with and without water soluble binder

To further evaluate the inventive compositions, a comparative test was made with treatments including or excluding a water soluble binder. For all batches the same variety and amount of seed was treated using the same process. Ingredients for the coating were mixed in dry form. Rice seeds were sprayed with enough water to moisten the surface, and then a portion of the powder composition was added to the seeds while stirring. The water and composition addition steps were repeated until the coating was complete. The seeds were allowed to dry.

In the composition all treatments included water insoluble binder in the form of Mowinyl-Powder DM2072P, oxygen generator in the form of Magnesium peroxide, and seed weight increaser in the form of iron oxide. The composition including water soluble binder further included PVA117S.

To allow close observation sowing of the seeds was simulated by placing 12 seeds from each treatment group into separate containers holding tap water. One day after placing the seeds in water all seeds treated with the composition including water soluble binder had numerous visible small to medium sized gas bubbles adhered to their sides or located around the seeds in the water. The composition lacking water soluble binder had no or few small bubbles attached to their sides or located around the seeds in the water.

Three days after submerging the seeds in water, those treated with the composition including water soluble binder all had medium to large bubbles adhered to their sides. There were also a number of medium to large bubbles in the water. The seeds treated with the composition lacking water soluble binder had no or only a few small bubbles adhered to their sides. Some seed treatment composition had broken away.

Eleven days after submerging the seeds in water, the majority of those treated with the composition including water soluble binder had germinated. Few small air bubbles could be seen, and no or only small fragments of the seed coating composition had broken away from the seeds and lay on the bottom of the container. Still for the seeds treated with the composition lacking water soluble binder approximately 10% had germinated. Some seed coating composition was present on the bottom of the container and a few seeds had medium to large air bubbles.

What the observations of this experiment made clear was that although suitable performance can be achieved using a composition lacking water soluble binder, a sizeable increase in visible oxygen generation and early germination of the seeds can be achieved when also incorporating a water soluble binder in the composition.

### Example 3: Field trials with inventive compositions

Rice seeds of the variety Koshihikari were soaked in tap water at 20°C for 72 hours. After soaking they were treated with a composition according to the invention, as detailed in Table 4 below. All amounts are given as weight percentages. For comparative purposes a control using a standard rice seed treatment composition was also evaluated. The treatment details are shown in Table 4 below.

**Table 4: Treatments**

| Composition | Total applied per kg rice seed | Oxygen generator | Weight increaser | Soluble binder | Insoluble binder (copolymer of VA/VeoVA/ acrylate ester) |
|---|---|---|---|---|---|
| Control | 0.575 kg | None | 87% Fe | 13% CaSO₄· 2H₂O | None |
| A | 1 kg | 42% MgO₂ | 50% Fe | 3% PVA | 5% |
| B | 0.5 kg | 42% CaO₂ | 50% Fe | 3% PVA | 5% |
| C | 0.5 kg | 42% MgO₂ | 50% Fe₂O₃ | 3% PVA | 5% |
| D | 1 kg | 42% MgO₂ | 50% Fe₂O₃ | 3% PVA | 5% |
| E | 0.71 kg | 42% CaO₂ | 50% Fe₂O₃ | 3% PVA | 5% |
| F | 1.42 kg | 42% CaO₂ | 50% Fe₂O₃ | 3% PVA | 5% |

As is evident from Table 4, the treatments in this experiment all have the same ratio of composition ingredients. The differing amount of composition applied to the seeds gives the ability to compare effects of different total application rates.

In a paddy field, 0.5m² plots were prepared by placing a circular strip in the ground which rose above the water level when the field was flooded. The water level was maintained at 2-5 cm above the soil surface for the duration of the trial. Using a conventional seeding rate of 30 kg seed/ha seeds were directly sown into the wet field. Three replicates of each composition were sown. Evaluations were made at numerous timepoints after sowing (days after sowing, DAS) with results shown in Tables 5 to 7 below.

**Table 5: Effect on Plant emergence and stand rate**

| | Plant emergence or stand rate (%) | | | | |
|---|---|---|---|---|---|
| Composition | 7DAS | 10DAS | 14 DAS | 21DAS | 28DAS |
| Control | 56 | 74 | 72 | 68 | 70 |
| A | 82 | 87 | 89 | 83 | 82 |
| B | 76 | 84 | 81 | 74 | 76 |
| C | 83 | 86 | 84 | 81 | 82 |
| D | 86 | 91 | 89 | 87 | 86 |
| E | 82 | 88 | 85 | 78 | 80 |
| F | 78 | 79 | 84 | 83 | 84 |

**Table 6: Effect on Growth index or plant vigor (biomass)**

| | Growth index or plant vigor for control (biomass) (%) | | | | |
|---|---|---|---|---|---|
| Composition | 7DAS | 10DAS | 14DAS | 21DAS | 28DAS |
| Control | 100 | 100 | 100 | 100 | 100 |
| A | 179 | 151 | 139 | 131 | 120 |
| B | 166 | 138 | 124 | 120 | 120 |
| C | 197 | 156 | 135 | 133 | 141 |
| D | 203 | 167 | 145 | 137 | 135 |
| E | 169 | 144 | 131 | 124 | 132 |
| F | 190 | 149 | 137 | 137 | 148 |

**Table 7: Effect on final crop stand**

| Composition | Number of stems per plot | |
|---|---|---|
| | 28DAS | 35DAS |
| Control | 114 | 202 |
| A | 150 | 247 |
| B | 139 | 234 |
| C | 151 | 254 |
| D | 156 | 258 |
| E | 149 | 248 |
| F | 170 | 279 |

As shown by the data, plant emergence (the evaluation made at days 7, 10, and 14) and stand rate (the evaluation made at days 21 and 28) were improved through the use of the inventive concept. Using the conventional treatment in the control group as a baseline value, growth index or vigor also show improved results through use of the inventive treatment. Also, increases were seen in crop stand from the use of the inventive treatments. Taken together, this data show how significant crop improvement can be gained through the use of the inventive concept.

Although the foregoing invention has been described in some detail by way of illustration and example for purposes of clarity of understanding, it will be obvious that certain changes and modifications may be practiced within the scope of the present invention.

## Claims

1. A rice seed treatment composition, comprising:
an oxygen generator in an amount from 5-80% by weight, preferably 20-55%,
a seed weight increaser in an amount from 20-80% by weight, preferably 40-80%; and
a water-insoluble binder in an amount from 1-20% by weight, preferably 1-10%.

2. A composition according to claim 1 further comprising a water soluble binder in an amount from 1-20% by weight, preferably 1-10%.

3. A composition according to either claim 1 or claim 2 wherein the oxygen generator is selected from magnesium peroxide (MgO₂), strontium peroxide (SrO₂), zinc peroxide (ZnO₂) and calcium peroxide (CaO₂).

4. A composition according to any one of claims 1-3 wherein the seed weight increaser is selected from iron (Fe), quartz sand, barium sulfate, calcium carbonate, zinc oxide and iron oxide (Fe₂O₃).

5. A composition according to any one of claims 1-4 wherein the water-insoluble binder is a polymer, preferably selected from polyacrylate adhesive, EVA, polyurethane, PVAc, and copolymer of VA, VeoVA and acrylate ester.

6. A composition according to any one of claims 2-5 wherein the water soluble binder is a polymer, preferably selected from polyvinyl alcohol, CMC, HPMC and PVP.

7. A composition according to any one of claims 2-6, wherein
the oxygen generator is in an amount from 30-50% by weight,
the seed weight increaser is in an amount from 50-70% by weight,
the water soluble binder is in an amount from 3-7% by weight; and
the water-insoluble binder is in an amount from 1-8% by weight.

8. A composition according to any one of claims 1-7 in powdered form.

9. A process for preparing coated rice seeds, comprising:
placing rice seeds having an original water content in a treatment vessel,
adding water and a powdered composition comprising an oxygen generator, a seed weight increaser and a water-insoluble binder to the treatment vessel,
mixing the contents of the treatment vessel until a homogenous coating of composition onto rice seeds is achieved; and
drying the coated rice seeds to approximately the original water content.

10. A process according to claim 9, wherein the powdered composition further comprises a water soluble binder.

11. A process according to claim 10, wherein the powdered composition is as in any one of claims 1-8.

12. A method of improving a growth characteristic of a rice crop, comprising
treating rice seeds with the composition according to any one of claims 1 to 8, sowing the treated seeds; and
growing the rice crop.

13. A method according to claim 12, wherein a growth characteristic selected from the group consisting of germination, emergence, establishment and growth rate is improved.

14. A method of improving retention of generated oxygen on a sown rice seed, comprising treating the rice seed with a composition according to any one of claims 1 to 8 prior to sowing.

15. A method of improving adherence of a coating composition on a rice seed, comprising treating the rice seed with a process according to any of claims 9-11.
